# EUROPÄISCHE PATENTSCHRIFT

(11) **EP 1 904 256 B1**
(45) Veröffentlichungstag und Bekanntmachung des Hinweises auf die Patenterteilung: **05.10.2011**
(21) Anmeldenummer: 05754478.5
(22) Anmeldetag: 05.07.2005
(51) Int. Cl.: B23B 31/16

(54) **SPANNFUTTER UND RUNDRICHTEINRICHTUNG**
CHUCK AND ROTARY ORIENTING DEVICE
MANDRIN DE SERRAGE ET DISPOSITIF DE DRESSAGE CYLINDRIQUE

(43) Veröffentlichungstag der Anmeldung: 02.04.2008
(73) Patentinhaber: GEMENDA AG, 6052 Hergiswil (CH)
(72) Erfinder: Ghezzi, Luigi, 2540 Grenchen (CH)
(74) Vertreter: Liebetanz, Michael
(86) Internationale Anmeldenummer: PCT/CH2005/000379
(87) Internationale Veröffentlichungsnummer: WO 2007/003060

(56) Entgegenhaltungen:
- GB-A- 1 407 441
- US-A- 4 775 160

## Beschreibung

### Technisches Gebiet der Erfindung

Die Erfindung betrifft ein Spannfutter, welches als Universalgreifer, als Spannfutter in Bohrmaschinen, als Greifer in Werkzeugmaschinen und als Spannfutter in Drehmaschinen einsetzbar ist; mit den Merkmalen des Obergegriffs des Anspruch 1.

### Stand der Technik

Aus dem Stand der Technik sind eine Reihe von Spannfuttern bekannt, beispielsweise aus der GB 1 407 441. Dort besteht ein Grundkörper, in welchem ein kreuzweiser Schlitz für vier einzelne Spannbacken vorgesehen ist. Die Spannbacken umfassen einerseits jeweils ein trapezoides Teil, welches in die entsprechenden Nuten eingesetzt ist. Dabei liegt eine abgeschrägte Fläche gegenüber einem ebenfalls trapezoid ausgeführten komplementär jeweils zugeordneten Betätigungs-Element. Zusammengesetzt können die beiden Elemente in einer Seitenansicht einen Quader ergeben. Dadurch, dass sie axial zueinander verschoben werden können, können die Spannbacken jeweils nach innen beziehungsweise aussen verschoben werden. Dafür wird auf dem Grundkörper eine Hülse aufgeschraubt, die eine Betätigungsfläche aufweist, mit der die Betätigungselemente axial verschiebbar sind. Bei diesem Spannfutter ist es in einfacher Weise möglich, einzelne Backen zu ersetzen.

Eine ähnliche Ausgestaltung von Spannbacken ist aus der WO 02/058870 bekannt, bei der drei solche Spannbacken auf einen Grundkörper aufgesetzt werden. Hierbei ist in jeder Spannbacke jeweils eine Feder vorgesehen, welche die Spannbacke gegenüber dem Grundkörper auseinander drückt. Die Hülse nach der WO 02/058870 übergreift dabei die Spannbacken nicht, sondern umfasst die komplementär zu den Spannbacken geneigten AuflaufFlächen.

Ferner ist es beispielsweise aus der DE 2 524 327 bekannt, lediglich zwei gegenüberliegende Spannbacken Elemente einzusetzen, die ein exzentrisches Halten von Gegenständen gestatten.

Aus der FR 2 282 965 ist auch bekannt, bestehende Backen unterschiedlich anzusteuern.

Ein Spannfutter mit den Merkmalen des Oberbegriffs des Anspruchs 1 ist aus der US 4,775,160 bekannt.

Es ist bei vielen Anwendungen notwendig, Gegenstände in einem Bereich zu ergreifen und einzuspannen, der einen geringeren Durchmesser aufweist, als Bereiche in Richtung der beiden gegenüberliegenden Enden. Hierfür liefert der Stand der Technik keine geeignete Lösung.

Ausgehend von diesem Stand der Technik liegt der Erfindung die Aufgabe zu Grunde, einen Universalgreifer der eingangs genannten Art auszugestalten, der in einfacherer Weise den Einsatz von zu spannenden Elementen gestattet, die mit einem gegenüber dem zu spannenden Durchmesser grösseren Abschnitt durch die Spannbacken hindurchgeführt werden müssen.

Ein weiteres Ziel liegt darin, eine Spannbacke anzugeben, die es ermöglicht, qualitativ hochwertige Arbeitsergebnisse, auf Drehmaschinen etc., zu erreichen, ohne dass Eindrücke der Spannbacken auf dem Material zu sehen sind.

Eine weitere Aufgabe der Erfindung liegt darin, den Verschleiss der Spannbacken zu reduzieren und insbesondere auch noch nach einigen 10'000 Spannvorgängen einen Rundlauf der gespannten Gegenstände im Bereich von wenigen Mikrometern zu erreichen. Sofern eine Spannbacke beschädigt ist, soll die Vorrichtung insgesamt in möglichst kurzer Zeit wieder einsatzbereit sein, wobei die Merkmale der Erfindung die rasche Auswechslung einer einzelnen Spannbacke unterstützen.

Ferner ist es ein Ziel der Erfindung, unrunde Elemente zu spannen, platzsparend zu spannen und es zu ermöglichen direkt metrisch oder in Zoll-Massen zu arbeiten.

### Zusammenfassung der Erfindung

Die obenstehende Aufgabe wird gemäss der Erfindung mit einem Spannfutter mit den kennzeichnenden Merkmalen des Anspruchs 1 gelöst. Eine erfindungsgemässe Spannbacke ist in Ansprüchen 7 oder 8 gekennzeichnet.

Dadurch, dass der Grundkörper im Prinzip ohne Belastung verbleibt, handelt es sich bei ihm um eine eine hohe Lebensdauer aufweisende Hülse, während die Spannbacken in kurzer Zeit, bei Versuchen der Anmelderin beispielsweise in unter einer Minute, gewechselt werden können.

Weitere vorteilhafte Ausführungsförmen sind in den Unteransprüchen gekennzeichnet.

### Kurze Zusammenfassung der Zeichnungen

Die Erfindung wird nun beispielhaft unter Bezugnahme auf die beigefügten Zeichnungen näher beschrieben. Es zeigen:
- Fig. 1: eine perspektivische Explosionsansicht eines erfin- dungsgemässen Universalgreifers ;
- Fig. 2: eine perspektivische Ansicht einer Spannbacke aus der Fig. 1 von unten;
- Fig. 3: eine perspektivische Ansicht einer Spannbacke aus der Fig. 1 von oben;
- Fig. 4: eine Querschnitt-Ansicht einer Rund- richtscheibe zum Einsatz mit einem Universalgreifer nach Fig. 1;
- Fig. 5: eine teilweise geschnittene Seitenansicht eines erfin- dungsgemässen Universalgreifers nach Fig. 1 mit Spann- backen nach Fig. 2, überlagert mit einer Darstellung der Federelemente, wenn keine Spannbacken eingesetzt sind; und
- Fig. 6: eine Schnittansicht von vorne auf die Vorrichtung nach Fig. 5 entlang der Linie VI-VI.

### Ausführliche Beschreibung von Ausführungsbeispielen der Erfindung

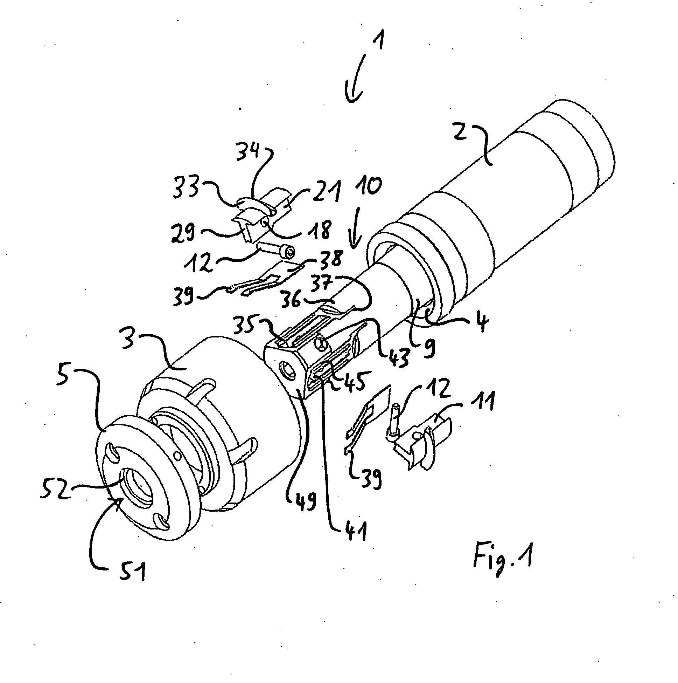

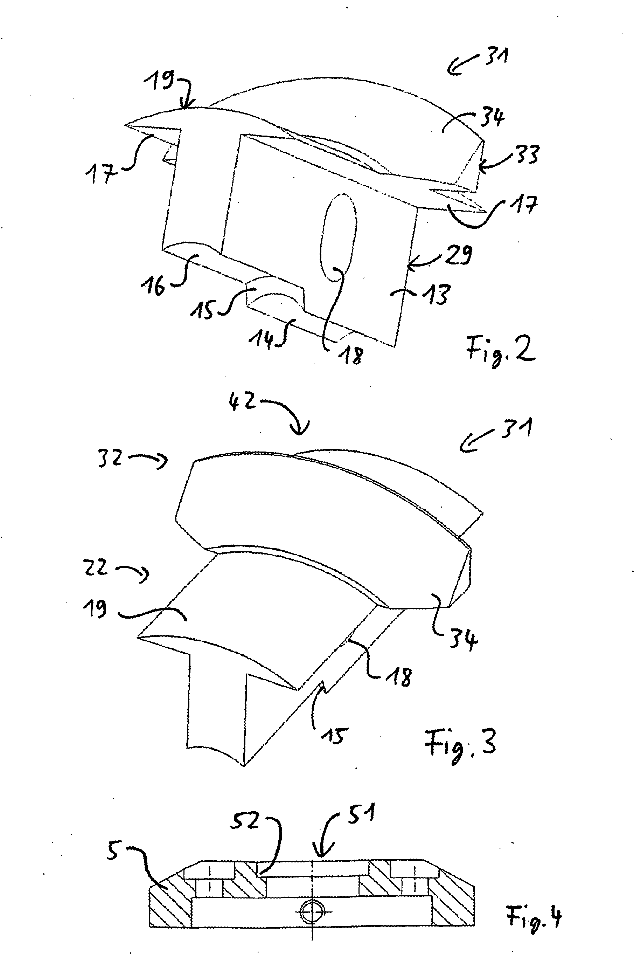

Die Fig. 1 zeigt eine Gesamtansicht eines Universalgreifers 1 in einer Explosions-Darstellung. Dieser wird von vorne in eine Hülse 2 eingeschoben, die drehbar gelagert ist. Der Universalgreifer 1 besteht aus einem Grundkörper 10, an dem drei Spannbacken 11, 21 und 31 (siehe Fig. 2 und 3) montiert sind. Zu jeder Spannbacke 11, 21 oder 31, gehört ein Befestigungs-Stift 12, der durch ein in der Spannbacke 11, 21 oder 31 vorgesehenes Langloch 18 hindurchragt.

Eine Spannbacke 31 wird im Zusammenhang mit den Fig. 2 und 3 näher beschrieben, die jeweils eine andere perspektivische Ansicht einer Spannbacke 31 zeigen. Gleiche Merkmale sind jeweils mit gleichen Bezugszeichen in allen Zeichnungen versehen. Die Spannbacke 31 verfügt über einen im wesentlichen quaderförmigen Grundkörper 13 mit einer Spannbacken-Unterfläche 14, die über eine Stufe 15 abgesetzt ist und in eine zurückgesetzte Fläche 16 übergeht. Die zurückgesetzte Fläche 16 kann insbesondere in Längsrichtung der Spannbacke 31 leicht geneigt sein, das heisst zu der Stufe 15 hin ansteigend, um ein Herausziehen eines gelagerten Gegenstandes zu vereinfachen. Dabei kann das Ansteigen der zurückgesetzten Fläche 16 so beschaffen sein, dass die Stufe 15 aufgehoben wird und die zurückgesetzte Fläche 16 an die Spannbacken-Unterfläche 14 heranragt.

Die Spannbacken-Fläche 14 ist auf der Unterseite konkav ausgeformt, um ein entsprechendes Rundstück aufnehmen und spannen zu können. Spezielle Spannbackensätze mit Spannbacken 11, 21, 31 können auch unterschiedliche Spannbacken-Flächen 14 aufweisen, insbesondere um Werkstücke exzentrisch zu lagern. Die konkave Fläche 14 gestattet es, Elemente zu spannen, deren Durchmesser, oder deren lokaler Durchmesser am Ort der jeweiligen Spannbacke 11, 21, 31, kleiner ist.

Der kleinere Durchmesser des Langlochs 18, in Bezug auf die Krümmung der Unterfläche 14 radial verlaufend, ist jeweils vorteilhafterweise etwas grösser als der Durchmesser des Stiftes 12, so dass sich die Spannbacke 31 in ihrer Längsrichtung mit Spiel bewegen kann, wenn ein solcher Stift 12 beispielsweise im Grundkörper 10 festgehalten wird. Die Spannbacke 11 ist in der Vorder- oder Rückansicht mit dem Grundkörper 13 T- förmig ausgestaltet, wobei auf beiden Seiten des Grundkörpers 13 eine Flanschfläche 17 vorgesehen ist. Die Flanschfläche 17 kann insbesondere gekrümmt sein (beispielsweise wie die Flanschfläche 14) oder eben sein. Die Oberseite 19 der Spannbacke 11 ist in ihrer Längsrichtung in drei Abschnitte 22, 32 und 42 unterteilt.

Der funktional wesentlichste Teil ist der Mittelteil 32, der auf der zum einzuschiebenden Werkstück zeigenden Seite 33 eine in der Ausrichtung (das heisst Längsrichtung) des Langlochs 18 verlaufende Anstossfläche 33 aufweist. Auf der gegenüberliegenden Seite besteht eine konische Verjüngung oder Konusfläche 34, die insbesondere auch in Quer-Richtung der Spannbacke 31 konvex gekrümmt sein kann. Die vorderen und hinteren Bereiche 22 und 42 der Oberseite 19 der Spannbacke 11 sind bezüglich einer auf die Mittelachse des Grundkörpers 10 ausgerichteten Achse gekrümmt.

An dem Grundkörper 10 sind hier drei Auflageflächen 35 vorgesehen, die eben sind und auf der einführseitigen Seite für die Hülse 2 in einen Schlitz 37 übergehen, der von einem (in der Vorderansicht im Schnitt) Kreisabschnitt 36 des Grundkörpers 10 abgedeckt wird. Seitlich und gegebenenfalls nach vorne sind diese Auflageflächen 35 jeweils durch Auflagekanten 45 begrenzt. Damit ergibt sich eine Stufe, auf der Enden 49 einer Blattfeder 38, die U-förmig ausgestaltet ist, absetzbar ist. Zusätzlich ist die Blattfeder 38 in den genannten Schlitz 37 einführbar. Der Boden des U's der Feder 38 ist in den Schlitz 37 einsteckbar und die beiden von dem Grundkörper 10 weg vorgespannten freien Enden 39 der Feder 38 sind links und rechts zu einem radialen Schlitz 41 angeordnet, in den der Grundkörper 13 der Spannbacke 11, 21 oder 31 einschiebbar ist. Anstelle der Klemmung in den Schlitzen 37 ist es auch möglich, die Federn 38 im Bereich der (dann nicht vorhandenen) Schlitze 37 festzuschrauben oder sonst wie auf dem Grundkörper 10 zu befestigen, beispielsweise durch Schweissen, insbesondere Punktschweissen.

Somit kann, und dies ist der kleinstmögliche Spanndurchmesser, die Spannbacke 11, 21 oder 31 mit ihrer Unterseite 17 auf der Fläche 35 aufliegen, nur getrennt durch die dazwischen liegenden freien Arme 39 der Blattfeder 38. In parallel zu der Oberfläche 35 verlaufenden Bohrungen 43 werden die Stifte 12 eingesteckt, wobei sie durch die Langlöcher 18 in den Spannbacken 11, 21 oder 31 ragen. Somit werden in der Ruhestellung die Spannbacken 11, 21 oder 31 durch den Druck der freien Enden 39 der Feder 38 auf die Unterseiten 17 der Spannbacken 11, 21 oder 31 in die äusserste radiale Ausrichtung gebracht. Bei einem Einschieben des Grundkörpers 10 in die Hülse 2 laufen die konischen Flächen 34 gegen komplementär ausgeformte Flächen 4, vorzugsweise im Mündungsbereich, der Hülse 2 auf, und werden somit gegen die Federkraft der Feder 38 zu der Hauptachse des Grundkörpers 10 zusammengedrückt. Die Bohrungen 43 können auch schräg verlaufen.

Es bestehen mehrere Möglichkeiten, den Grundkörper 10 translatorisch bezüglich der Hülse 2 zu bewegen. Eine Möglichkeit ist das Vorsehen eines Gewindes auf dem Grundkörper 10 an seinem in der Hülse 2 gelagerten Ende 9, wobei dann durch Drehung einer entsprechenden Aussenhülse, die in oder hinter der Hülse 2 angeordnet ist, eine translatorische Bewegung des Grundkörpers 10 in die Hülse 2 hinein bewirkt wird. Die andere, hier in der Fig. 1 dargestellte Möglichkeit, besteht in dem Vorsehen einer Hülse 3, die auf der in der Fig. 1 nicht dargestellten Innenseite über Anschlagflächen verfügt, welche entweder gegen die Fläche 33 auf den Spannbacken 11, 21 oder 31 drückt, oder auf die Vorderseite 49 des Grundkörpers 10. Bei der direkten Einwirkung auf die Vorderseite 33 der Spannbacken 11, 21 oder 31, ist die Kraftübertragung durch die komplementären Flächen 4 und 34 direkt. Bei dem Einwirken auf die Vorderseite 49 des Grundkörpers 10 bewegt sich jede Spannbacke 11, 21, 31 mit ihrer vorderen Fläche 29 gegen eine entsprechende in der Hülse 10 befindliche vordere Öffnung des Schlitzes 41, und wird somit indirekt auf die Flächen 4, beziehungsweise 34, geschoben. In beiden Fällen erlebt der Grundkörper 10 höchstens eine translatorische Kraftübertragung, aber erfährt keine radialen Kräfte.

In der Fig. 1 ist auf der Hülse 3 eine Rundrichtscheibe 5 vorgesehen, die eine zylindrische Aussenform aufweist und im vorderen Bereich eine mittige Bohrung 51. Diese durchgehende Bohrung 51 verbreitert sich auf der nach aussen reichenden Mündung der Rundrichtscheibe 5 über eine Stufe 52. Somit ist es möglich, in die Öffnung 51 jeweils ein entsprechendes Einsatz-Stück (hier nicht dargestellt) mit einer zentralen Bohrung vorzusehen, die komplementär zu beispielsweise dem Schraubenkopf ausgestaltet ist, der in dem Universalgreifer 1 gehalten werden soll. Somit wird ein solches zu bearbeitendes Werkstück durch die Spannbacken, 11, 21 und 31, für einen Rundlauf gehalten und zusätzlich der Kopf des Werkstückes durch das in die Öffnung 51 einsetzbare Einsatzstück in einem gewissen Abstand vor der Halterung der Spannbacken 11, 21 und 31 zusätzlich gestützt.

Die Fig. 4 zeigt eine Querschnitt-Ansicht einer solchen Rundrichtscheibe 5. Die für die mittige Bohrung 51 vorgesehenen Einsätze werden vorzugsweise in die Stufe 52 eingesetzt, vorteilhafterweise in einem leichten Presssitz, so dass der Einsatz gehalten wird, bevor der Kopf eines zu spannenden Werkstückes zu halten ist, andererseits solch ein Einsatz aber auch in einfacher Weise entnehmbar und ersetzbar ist.

Die Ausgestaltung dieses Universalgreifers ermöglicht insbesondere das Einsetzen und nachfolgende Bearbeiten von Schrauben, die ein im Durchmesser grösseres Gewinde haben, als es der restliche Schaft ausmacht, und gleichzeitig einen noch zu bearbeitenden Schraubenkopf aufweisen. Dann ist nämlich das bearbeitete Gewinde in den hinteren Bereich des Grundkörpers einzubringen, das heisst über die später den kleineren Schaft umgreifenden Spannbackenflächen 14. Hierfür ist der Bereich der Rückfläche 16 beziehungsweise der freie Bereich dahinter ausgelegt, wenn die Spannbacken 11, 21 oder 31 in Längsrichtung kurz genug ausgelegt sind.

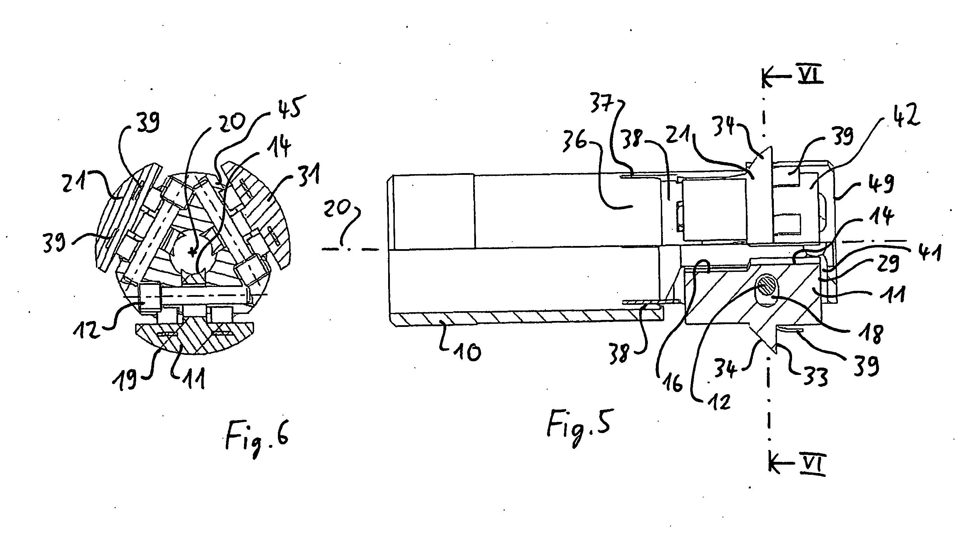

Die Fig. 5 zeigt eine teilweise geschnittene Seitenansicht eines erfindungsgemässen Universalgreifers nach Fig. 1 mit Spannbacken nach Fig. 2 und Fig. 6 eine geschnittene Ansicht von vorne auf die Vorrichtung nach Fig. 5 entlang der Linie VI-VI. Dabei stellen sowohl Fig. 5 als auch Fig. 6 überlagerte Zeichnungen da, bei der einerseits die eingesetzten Spannbacken 11, 21, 31 dargestellt sind, andererseits auch die Federelemente 38, wenn keine Spannbacken 11, 21, 31 eingesetzt sind. Somit sind die Raumverhältnisse gut erkennbar. Es sind die Spannbacken 11, 21, 31 in einem teilweise gespannten Zustand dargestellt. Ferner sind in Fig. 6 die beiden quaderförmigen Federenden 39 dargestellt, wie sie sich darstellen, wenn keine Spannbacke 11, 21 oder 31 eingeführt ist; sie sind also im freien, gelösten Zustand dargestellt. Das führt in der Darstellung der Fig. 5 dazu, dass die Feder 38 zum Beginn des U's unterhalb des Segmentes 36 liegt, die freien Enden dann zuerst virtuell unterhalb der Spannbacke 21 bleiben und erst im vorderen Bereich 42 oberhalb der im gespannten Zustand dargestellten Spannbacke 21 verlaufen. Damit erkennt man auch die Grösse des Spannweges, der auf der anderen Seite in seinem maximalen Hub von der radialen Höhe der Konusfläche 34 abhängt.

Es ist festzuhalten, dass anstelle der Stifte 12 auch andere Halte-Elemente für die Spannbacken 11, 21, 31 vorgesehen sein können. Es könnten auch Schrauben sein. Insbesondere ist es möglich, die Stifte 12 beispielsweise aus einfachem Kunststoff herzustellen, da sie keine Kräfte aufnehmen müssen. Sie dienen nur dazu, ein Wegspringen der Spannbacken, 11, 21 und 31 gegen die Federkraft der Feder 38 zu verhindern.

Es ist auch möglich, ganz auf Stifte 12 zu verzichten und stattdessen ein federndes Rastsystem zu verwenden, bei dem die Backen einrasten. Auch kann ganz ohne ein Verriegelungssystem gearbeitet werden, da nach dem Einsetzen der Vorrichtung in die äussere Hülse die Spannbacken durch die sie umgebende Hülse gehalten werden und keine separate Verriegelung nötig ist.

Anstelle von drei Spannbacken, wie in dem hier dargestellten Ausführungs-Beispiel eingesetzt, ist es auch möglich, zwei, vier oder mehr Spannbacken einzusetzen. Der Vorteil des Universalgreifers liegt darin, dass für eine Spannung verschiedener Durchmesser der Grundkörper 10 immer derselbe bleibt. Somit ist ein Abgreifen oder Übergreifen von Durchmessern und Formen jeglicher Art möglich. Insbesondere ist durch die Nutzung eines Sets von unterschiedlichen Spannbacken 11, 21, 31 möglich, auch unrundes Material bearbeitbar. Auch kann das zu spannende Material eine Kugel oder ein Konus sein.

Das Wechseln einer einzelnen Spannbacke geschieht durch das Herausziehen oder Herausdrehen (falls ein Gewinde vorhanden ist) des Stiftes 12 und das Einsetzen einer neuen Spannbacke, wobei diese wiederum vorteilhafterweise durch einen Stift 12 gesichert wird. Diese Arbeit dauert, gemäss Versuchen der Anmelderin, unter zwei Minuten, wobei durch entsprechende Ausgestaltung des Verriegelungs-Mechanismus auch Wechselzeiten unter einer Minute möglich sind. Die Blattfeder 38 kann in einfachster Weise ersetzt werden, da sie lediglich in die Nut 37 eingeschoben ist.

Der Grundkörper 10 kann mit einem Aussen- oder Innengewinde versehen werden, und funktioniert somit sowohl auf eine Betätigung durch Zug- als auch durch Druckspannung. Die Grösse des Grundkörpers, insbesondere sein maximaler Innendurchmesser, ist beliebig festlegbar, und somit kann eine grosse Bandbreite von Spannungen mit einem Grundkörper erreicht werden. Die Spannbacken selbst sind einzeln oder im Paket von je drei Stück (bei drei Spannbacken) auswechselbar, und aus vielen bekannten Materialien herstellbar, so in weicher Ausführung, gehärteter Ausführung oder aus Kunststoff.

Vorteilhafterweise ist die Konus-Fläche 34 in einem 45°-Winkel ausgerichtet, also in einem 1:1 Verhältnis, um für ein Übergreifen ausgerüstet zu sein. Es kann jedoch auch eine Standard-Ausführung mit einem Winkel von 15° vorgesehen sein, oder es können andere dem Fachmann bekannte Winkel zur Anwendung kommen. Die Stifte 12 bilden die Backensicherung zum Wechseln der Spannbacken und sind in ihrer Dimension und Ausführung anpassbar, da sie keine Belastung aufnehmen.

Die Funktion der Blattfeder 38 liegt im Heben der Spannbacken im geöffneten Zustand. Sie ist in einfacher Weise auswechselbar. Die Feder 38 drückt insbesondere den vorderen Bereich 42 der Spannbacke 11 nach oben, so dass sich die Unterfläche 14 schräg stellt. Dadurch, dass die hintere Fläche 16 der Spannbacke 11 zurückgesetzt ist, verjüngt sich der Durchgang um die longitudinale Achse 20 des Grundkörpers 10 nicht. Damit ist in einfacher Weise ein Hintergreifen eines Gegenstandes möglich. Beim translatorischen Bewegen der Spannbacke drücken die komplementären Flächen 4 und 34 jede Spannbacke in die Horizontale, so dass die Unterfläche 14 jeder Spannbacke flach aufliegend zugreift. Dies wird durch das Verkippen jeder Spannbacke um ihren Stift 12 erreicht, wobei aber keine wesentlichen Kräfte auf diese Stifte 12 wirken.

Bei Langzeit-Tests hat die Anmelderin feststellen können, dass der Rundlauf um die Spannachse 20 auch über grosse Serien von Spannungen mit der gleichen Spannweite hervorragend ist und im Bereich von wenigen Mikrometern liegt. Damit ist ein solcher Universalgreifer gegenüber dem Stand der Technik in der Genauigkeit um Grössenordnungen überlegen.

Er ist auch deshalb so vielseitig einsetzbar, da bei einem Hubverhalten von 1:1 einer Längsverschiebung des Grundkörpers 10 um einen Millimeter eine Spannbackenverengung von 2 Millimetern entspricht. Insofern ist es bei genügend grosser Auslegung des Grundkörpers 10 möglich, eine nahezu beliebige Übergreifmöglichkeit und einen beliebigen Übergreifdurchmesser zu realisieren.

### Bezugszeichenliste

- 1: Universalgreifer
- 2: Hülse
- 3: Hülse
- 5: Rundrichtscheibe
- 9: Endbereich
- 10: Grundkörper
- 11: Spannbacke
- 12: Stift
- 13: Grundkörper
- 14: Spannbacken-Unterfläche
- 15: Stufe
- 16: zurückgesetzte Fläche
- 17: Flanschfläche
- 18: Bohrung
- 19: Spannbacken-Oberseite
- 20: Spannachse
- 21: Spannbacke
- 22: Hinterseite der Spannbacke
- 29: Vorderfläche der Spannbacke
- 31: Spannbacke
- 32: Mittlerer Abschnitt der Spannbacke
- 33: Anschlags-Fläche
- 34: Konusfläche
- 35: Blattfeder-Auflagefläche
- 36: Kreisabschnitts-Element
- 37: Schlitz
- 38: Blattfeder
- 39: freie Enden der Blattfeder
- 41: Spannbacken-Schlitz
- 42: Vordere Seite der Spannbacke
- 43: Bohrung
- 45: Auflagekanten
- 49: Vorderseite des Grundkörpers
- 51: mittige Bohrung
- 52: Stufe

## Patentansprüche

1. Spannfutter mit Spannbacken (11, 21, 31) und einem Grundkörper (10), in welchem eine Mehrzahl von radial durchgehenden, longitudinalen Schlitzen (41) für jeweils eine einzelne Spannbacke (11, 21, 31) vorgesehen ist, wobei die Spannbacken (11, 21, 31) jeweils eine Auflauffläche (34) aufweisen und jeweils radial zu dem Grundkörper (10) verschiebbar sind, wenn eine schräge Spannbackenfläche (34) mit einer komplementären Fläche (4) zueinander verschoben wird, so dass eine Spannbackenfläche (14) von jeder Spannbacke (11, 21, 31) ein um die Längsachse (20) des Grundkörpers (10) zu haltendes Werkstück spannt, wobei jede Spannbacke (11, 21, 31) über eine in der Ebene senkrecht zur Längsachse (20) des Grundkörpers (10) verlaufende Anschlagfläche (33 oder 49) verfügt, die beim Spannen durch direkten Formschluss mit einer komplementären Fläche eines Betätigungselementes (3) oder durch Formschluss mit einer komplementären Fläche des Grundkörpers (10), der in einem weiteren Formschluss mit dem Betätigungselement (3) steht, in longitudinaler Richtung (20) kraftbeaufschlagt wird, **dadurch gekennzeichnet, dass** der Grundkörper (10) um die Schlitze (41) herum an seiner Aussenseite über abgeflachte Bereiche (35) verfügt, auf denen jeweils mindestens ein Federelement (38) fixiert ist.

2. Spannfutter nach Anspruch 1, **dadurch gekennzeichnet, dass** die abgeflachten Bereiche (35) in tangential verlaufende Schlitze (37) übergehen, in denen die Enden von Blattfederelementen (38) fixierbar sind.

3. Spannfutter nach Anspruch 1 oder 2, **dadurch gekennzeichnet, dass** jedes Blattfederelement (38) U-förmig mit zwei freien Enden (39) ist, die von den abgeflachten Bereichen (35) weg vorgespannt sind.

4. Spannfutter nach einem der Ansprüche 1 bis 3, **dadurch gekennzeichnet, dass** quer zu jedem Schlitz (41) in dem Grundkörper (10) eine Bohrung (43) vorgesehen ist, die den zugehörigen Schlitz (41) kreuzt und in die ein Befestigungselement (12) einsetzbar ist, um eine Spannbacke (11, 21, 31) zu halten.

5. Spannfutter nach einem der Ansprüche 1 bis 4, **dadurch gekennzeichnet, dass** zwei, drei, vier oder N Schlitze (41) in dem Grundkörper (10) für eine entsprechende Anzahl von Spannbacken in gleichmässigen Winkelabstand von 180 Grad, 120 Grad, 90 Grad oder 360/N Grad vorgesehen sind, wobei N >= 5.

6. Spannfutter nach einem der Ansprüche 1 bis 5, **dadurch gekennzeichnet, dass** eine Rundrichtscheibe (5) mit einer mittigen (20), durchgehenden Bohrung vorgesehen ist, die eine Stufe definiert (52), auf der ein Einsatz mit einer für ein Kopfstück eines zu lagernden Werkstückes komplementären Haltefläche einfügbar ist.

7. Spannbacke für ein Spannfutter nach einem der Ansprüche 1 bis 6, **dadurch gekennzeichnet, dass** sie über einen länglichen Basiskörper (13) verfügt, an dessen Unterseite eine vordere Spannfläche (14) und eine hintere zurückgesetzte Fläche (16) vorgesehen ist, um einen Freiraum für ein Hintergreifen eines zu spannenden Werkstückes zu schaffen, dass sie eine Oberseite mit einer schrägen Spannbackenfläche (34) umfasst und dass sie über eine senkrecht zur Längsachse (20) des Basiskörpers (13) verlaufende Anschlagfläche (33 oder 49) verfügt, die beim Spannen durch direkten Formschluss mit einer komplementären Fläche eines Betätigungselementes (3) oder durch Formschluss mit einer komplementären Fläche des Grundkörpers (10), der in einem weiteren Formschluss mit dem Betätigungselement (3) steht, in longitudinaler Richtung (20) kraftbeaufschlagbar ist, und dass an der Unterseite des Basiskörpers (13) seitlich neben der Spannfläche (14) jeweils eine ebene Unterseite (17) zur Abstützung eines Federelementes (38) des Spannfutters gegenüber eines entsprechenden um einen Schlitz (41) des Grundkörpers (10) des Spannfutters an dessen Aussenseite angeordneten abgeflachten Bereichs (35) vorgesehen ist.

8. Spannbacke nach Anspruch 7, **dadurch gekennzeichnet, dass** quer zur longitudinalen Achse (20) ein durchgehendes Langloch (18) vorgesehen ist.

## Claims

1. A chuck comprising clamping jaws (11, 21, 31) and a basic body (10), in the latter there is provided a plurality of radially continuous, longitudinal slots (41) each intended for one individual clamping jaw (11, 21, 31), wherein the clamping jaws (11, 21, 31) each have a run-on surface (34) and each can be displaced radially with respect to the basic body (10) if a slanted clamping jaw surface (34) and a complementary surface (4) are displaced relative to one another such that a clamping jaw surface (14) of each clamping jaw (11, 21, 31) clamps a workpiece to be held around the longitudinal axis (20) of the basic body (10), wherein each clamping jaw (11, 21, 31) has a stop surface (33 or 49) which extends in the plane perpendicular to the longitudinal axis (20) of the basic body (10) and which is exposed to force in the longitudinal direction (20) during clamping through a direct form-fitting connection with a complementary surface of an actuating element (3) or through a form-fitting connection with a complementary surface of the basic body (10) which makes a further form-fitting connection with the actuating element (3), **characterized in that** the basic body (10) has on its outer side, around the slots (41), flattened regions (35) on each of which at least one spring element (38) is fastened.

2. The chuck according to claim 1, **characterized in that** the flattened regions (35) merge into tangentially extending slots (37) in which ends of leaf spring elements (38) can be fastened.

3. The chuck according to claim 1 or 2, **characterized in that** each leaf spring element (38) is U-shaped with two free ends (39) which are preloaded away from the flattened regions (35).

4. The chuck according to anyone of the claims 1 to 3, **characterized in that** a bore (43) is provided in the basic body (10) transversely with respect to each slot (41), which bore (43) crosses the associated slot (41) and into which a fastening element (12) can be inserted in order to hold a clamping jaw (11, 21, 31).

5. The chuck according to anyone of the claims 1 to 4, **characterized in that** two, three, four or N slots (41) are provided in the basic body (10) for a corresponding number of clamping jaws, at a uniform angular spacing of 180 degrees, 120 degrees, 90 degrees or 360/N degrees, where N >= 5.

6. The chuck according to anyone of the claims 1 to 5, **characterized in that** a rotary orienting disk (5) that has a central (20), continuous bore which defines a step (52) on which there can be fitted an insert having a holding surface which is complementary for a head piece of a workpiece to be mounted.

7. A clamping jaw for a chuck according to anyone of the claims 1 to 6, **characterized in that** it has an elongate base body (13) on whose bottom side a front clamping surface (14) and a rear, set-back surface (16) are provided in order to create a cavity for engaging behind a workpiece to be clamped, **in that** it comprises an upper side with a slanted clamping jaw surface (34), and **in that** it has a stop surface (33 or 49) which extends perpendicular to the longitudinal axis (20) of the base body (13) and which is exposed to force in the longitudinal direction (20) during clamping through a direct form-fitting connection with a complementary surface of an actuating element (3) or through a form-fitting connection with a complementary surface of the basic body (10) which makes a further form-fitting connection with the actuating element (3), and **in that** on the bottom side of the base body (13) laterally near each clamping surface (14) a planar bottom side (17) is provided for supporting of a spring element (38) of the chuck against a respective flattened region (35) which is provided around a slot (41) of the basic body (10) of the chuck on its outer side.

8. The clamping jaw according to claim 7, **characterized in that** a continuous oblong hole (18) is provided transversely with respect to the longitudinal axis (20).

## Revendications

1. Mandrin de serrage avec des mâchoires de serrage (11, 21, 31) et un corps de base (10), dans lequel est prévue une pluralité de fentes (41) longitudinales et radialement transitant pour chacune des mâchoires de serrage (11, 21, 31), où les mâchoires de serrage (11, 21, 31) comprennent chacune une surface de contact (34) et peuvent être radialement déplacées par rapport au corps de base (10), si une surface de mâchoire de serrage (34) oblique est déplacée vers une surface complémentaire (4), pour qu'une surface de mâchoire de serrage (14) de chaque mâchoire de serrage (11, 21, 31) serre une pièce à usiner qui est à maintenir autour de l'axe longitudinale (20) du corps de base (10), où chaque mâchoire de serrage (11, 21, 31) comprend une surface de butoir (33 ou 49) qui s'étend perpendiculairement par rapport au plan de l'axe longitudinale (20) du corps de base (10), qui reçoit une force de direction longitudinale (20) lors du serrage par liaison mécanique directe avec une surface complémentaire de l'élément de commande (3) ou par liaison mécanique avec une surface complémentaire du corps de base (10) qui se trouve dans une autre liaison mécanique avec l'élément de commande (3), **caractérisé en ce que** le corps de base (10) comprend à sa face extérieure autour de la fente (41) des parties aplaties (35) sur lesquelles est fixé au moins un élément de ressort (38).

2. Mandrin de serrage selon la revendication 1, **caractérisé en ce que** les parties aplaties (35) se transforment dans des fentes (37) disposées de manière tangentielles, dans lesquelles les bouts des éléments de ressort (38) peuvent être fixés.

3. Mandrin de serrage selon la revendication 1 ou 2, **caractérisé en ce que** chaque élément de ressort (38) est en forme de "U" avec deux bouts libres (39), qui sont sous prétension dans la direction opposée des portions aplaties (35).

4. Mandrin de serrage selon l'une des revendications 1 à 3, **caractérisé en ce qu'**un alésage (43) est prévu transversalement par rapport à chaque fente (41) dans le corps de base (10), qui croise ladite fente (41) est peut être inséré dans un élément de fixation (12) pour tenir une mâchoire de serrage (11, 21, 31).

5. Mandrin de serrage selon l'une des revendications 1 à 4, **caractérisé en ce que** deux, trois, quatre ou N fentes (41) sont prévues dans le corps de base (10) pour un nombre équivalent de mâchoires de serrage dans un espacement d'angle régulier de 180°, 120°, 90° ou 360/N°, où N ≥ 5.

6. Mandrin de serrage selon l'une des revendications 1 à 5, **caractérisé en ce qu'**un dispositif de dressage cylindrique (5) est prévu avec un alésage central (20), qui définit une marche (52), sur laquelle un insert peut être introduit ayant une surface de maintien complémentaire par rapport à une pièce de tète d'une pièce à usiner.

7. Mâchoire de serrage pour un mandrin de serrage selon l'une des revendications 1 à 6, **caractérisé en ce qu'**elle comprend un corps de base (13) oblong, où une surface de serrage (14) antérieure et une surface retirée postérieure (16) sont prévues à sa face inférieure pour créer un espace libre pour prendre par arrière une pièce à usiner et à serrer, **en ce qu'**elle prend une face supérieure avec une surface de mâchoire de serrage (34) oblique et **en ce qu'**elle comprend une surface de butoir (33 ou 49) qui s'étend perpendiculairement par rapport à l'axe longitudinale (20) du corps de base (13), qui reçoit une force dans la direction longitudinale (20) lors du serrage par une liaison mécanique directe avec une surface complémentaire d'un élément de commande (3) ou par liaison mécanique avec une surface complémentaire du corps de base (10) qui se trouve dans une autre liaison mécanique avec l'élément de commande (3), et **en ce qu'**une surface inférieure plane (17) est prévue à la surface inférieure du corps de base (13) à côté de la surface de serrage (14) pour tenir un élément de ressort (38) d'un mandrin de serrage par rapport à une portion aplatie (35) prévue autour d'une fente (41) du corps de base (10) de la mâchoire de serrage à sa partie extérieure.

8. Mâchoire de serrage selon la revendication 7, **caractérisé en ce qu'**un alésage (18) oblong et traversant est prévu transversalement par rapport à l'axe longitudinal (20).
